# EUROPÄISCHE PATENTSCHRIFT

(11) **EP 1 925 445 B1**
(45) Veröffentlichungstag und Bekanntmachung des Hinweises auf die Patenterteilung: **19.04.2017**
(21) Anmeldenummer: 07112123.0
(22) Anmeldetag: 10.07.2007
(51) Int. Cl.: B32B 15/08, H01F 7/08

(54) **Anordnung von zwei Teilen**
Assembly consisting of two parts
Installation de deux parties

(30) Priorität: 29.08.2006 DE 102006040342
(43) Veröffentlichungstag der Anmeldung: 28.05.2008
(73) Patentinhaber: ROBERT BOSCH GMBH, 70442 Stuttgart (DE)
(72) Erfinder: Denneler, Werner, 73207, Plochingen (DE); Vogt, Andreas, 71272, Renningen (DE); Seidner, Bruno, 72760, Reutlingen (DE); Vollmer, Helmuth, 71394, Kernen (DE)

(56) Entgegenhaltungen:
- EP-A- 0 623 772
- EP-A- 1 244 116
- EP-A- 1 587 115
- DD-A- 277 954
- DE-A1- 2 709 167
- DE-A1- 10 156 232
- US-A- 2005 242 519

## Beschreibung

### Stand der Technik

Die Erfindung betrifft eine Anordnung von zwei Teilen gemäß dem Oberbegriff des Anspruchs 1.

Zum Lösen von Verbindungen zwischen Teilen, die aufgrund von Adhäsionskräften aneinanderhaften, müssen zum Teil erhebliche Ablösekräfte aufgebracht werden. Die Anwesenheit flüssiger Medien zwischen den aneinander haftenden Teilen verstärkt die Adhäsion zusätzlich.

Handelt es sich bei den beiden Teilen beispielsweise um Teile eines Gas-Injektors mit einem Flachsitz, wobei ein auf einen Magnetanker aufvulkanisierter Elastomer gegen einen Düsensitz gepresst wird, so muss zum Öffnen des Injektors die entsprechende Ablösekraft von einer Spulenanordnung aufgebracht werden, um den Elastomer vom Düsensitz abzuheben. Die notwendige Ablösekraft ist dabei ein Hauptparameter bei der Auslegung des Injektors, insbesondere des Magnetankers und der Spulenanordnung. Die Kosten für einen Injektor steigen dabei mit zunehmender aufzubringender Ablösekraft.

### Offenbarung der Erfindung

### Technische Aufgabe

Der Erfindung liegt daher die Aufgabe zugrunde, eine Anordnung von zwei aneinander anlegbaren Teilen vorzuschlagen, bei der die beiden Teile mit reduzierter Ablösekraft voneinander trennbar sind.

### Technische Lösung

Diese Aufgabe wird mit den Merkmalen des Anspruchs 1 gelöst.

Vorteilhafte Weiterbildungen der Erfindung sind in den Unteransprüchen angegeben.

Der Erfindung liegt der Gedanke zugrunde, zumindest eines der aneinander haftbaren Teile derart auszubilden, insbesondere auszuformen, dass die Ablösekraft zum Überwinden der Adhäsionskraft nicht gleichmäßig im Bereich der aneinander anliegenden Kontaktflächen wirkt, sondern ungleichmäßig über die Kontaktflächen verteilt eingeleitet wird, insbesondere derart, dass die Ablösekraft nur an einer oder nur an einigen wenigen Stellen gleichzeitig wirkt. Durch die Konzentration der Ablösekraft auf eine oder mehrere lokale Stellen, wirken lokal hohe Zugspannungen, die die Adhäsionskräfte überwinden und lokal zu einem Abreißen des Kontaktes zwischen den Teilen führen. Insbesondere ist zumindest eines der Teile derart ausgebildet, dass der Ablösevorgang schälend erfolgt, d.h. dass der Ablösevorgang bzw. die Wirkstelle der Ablösekraft ausgehend von zumindest einer Startstelle über die gesamten Kontaktflächen wandert. Aufgrund der erfindungsgemäßen Ausbildung zumindest eines der beiden Teile und der damit verbundenen ungleichmäßigen Einleitung der Ablösekraft, können die beiden Teile mit einer vergleichsweisen geringen Ablösekraft voneinander getrennt werden. Mit Vorteil kann auf zusätzliche, die Adhäsionskräfte herabsetzende Beschichtungen verzichtet werden. Auch müssen nicht zwangsweise Maßnahmen vorgesehen werden, die ein in Kontakt kommen der Kontaktflächen mit Flüssigkeiten vermeiden.

Die erfindungsgemäße Anordnung zweier Teile eignet sich insbesondere zum Einsatz bei (Flachsitz-) Ventilen. Prinzipiell ist die erfindungsgemäße Anordnung jedoch auch beim Entformen spritzgegossener (Elastomer-) Bauteile anwendbar.

Bevorzugt wird zumindest eines der Teile der Anordnung derart ausgestaltet, dass die Ablösekraft punktförmig, an einer begrenzten Fläche, oder linienförmig innerhalb der Kontaktfläche angreift. Dies führt dazu, dass die gerade oder gekrümmte, insbesondere kreisförmige, Linie, auf der die Ablösekraft während des Ablösevorgangs konzentriert ist, beim Aufbringen einer Zugkraft durch die Ablösemittel über die Kontaktflächen wandert, woraus ein schälender Ablösevorgang resultiert. Beginnt der Ablösevorgang beispielsweise an einem Punkt, so vergrößert sich während des Ablösevorgangs der Durchmesser der kreisförmigen Ablösekraftkonzentrationslinie. Diese wandert dabei in radialer Richtung konzentrisch vom Startpunkt des Ablösevorgangs weg. Auch eine Verkleinerung des Durchmessers einer Ablösekraftkonzentrationslinie hin zu einem Endpunkt ist realisierbar.

Aufgrund der erfindungsgemäßen Ausgestaltung der Anordnung von mindestens zwei Teilen muss die Ablösekraft nicht winklig zur Kontaktflächennormalen eingeleitet werden, sondern die Ablösekraft kann aus einer senkrecht zu Kontaktflächen wirkenden Zugkraft resultieren, welche von den Ablösemitteln aufgebracht wird. Als Ablösemittel eignen sich insbesondere Linearantriebe. Jedoch sind alle denkbaren Mittel zur Aufbringung einer Ablösekraft einsetzbar. Die Ablösekraft wird durch die spezielle Ausgestaltung zumindest eines der Teile asymmetrisch in Bezug auf die Flächenausdehnung eingeleitet und dadurch an einer oder wenigen Stellen konzentriert, wodurch die maximal aufzubringende Ablösekraft bzw. Zugkraft insgesamt reduziert werden kann.

Vorzugsweise umfasst mindestens eines der beiden Teile einen Elastomer. Dabei ist es von Vorteil, wenn zumindest eine der Kontaktflächen von dem Elastomer gebildet wird. Bevorzugt wird der Elastomer derart ausgeformt, dass er den Ablösevorgang aufgrund seiner Ausdehnungsbestrebung unterstützt.

In Weiterbildung der Erfindung ist mit Vorteil vorgesehen, dass der erste und/oder der zweite Elastomer bei aneinander anliegenden, insbesondere bei aneinandergedrückten bzw. aneinander gepressten Teilen ungleichmäßig stark, d.h. asymmetrisch in Bezug auf seine Flächenausdehnung komprimiert ist. Anders ausgedrückt ist zumindest ein Elastomer über die Kontaktflächen nicht gleichmäßig zusammengedrückt, sondern weist über die Kontaktfläche einen, insbesondere linearen, Komprimierungsverlauf auf. Der Ablösevorgang beginnt an dem Punkt, der Fläche oder der Linie bzw. an den Punkten bzw. den Flächen oder den Linien mit geringster Kompression und breitet sich von dort aus über die gesamten Kontaktflächen aus. Die Ablösekräfte wirken also bevorzugt nur an den sich senkrecht zu ihrer Längserstreckung bzw. senkrecht zu ihrer Tangente ausbreitenden Ablösekraftkonzentrationslinien. In dem übrigen noch anhaftenden Elastomerbereich wirkt die von den Ablösemitteln aufgebrachte Zugkraft (noch) nicht als Ablösekraft, sondern unterstützt die Entkompression des Elastomers. Durch die unterschiedlich starke Komprimierung des mindestens einen Elastomers wird mit Vorteil erreicht, dass der Elastomer selbst, durch die beim Komprimierungsvorgang gespeicherte Energie den Ablösevorgang unterstützt.

Eine unterschiedlich starke Komprimierung des mindestens einen Elastomers kann beispielsweise dadurch erreicht werden, dass der mindestens eine Elastomer im nicht komprimierten Zustand ungleichmäßig dick ist, d.h. eine über die Kontaktflächen ungleichmäßige Erstreckung senkrecht zu den Kontaktflächen aufweist. Dabei ist es denkbar, dass die Dicke des Elastomers ausgehend von einem oder mehreren Bereichen größerer Dicke linear abnimmt. Ebenso ist es denkbar, dass die Dicke ausgehend von einem oder mehreren Punkten in radialer Richtung, insbesondere linear, zunimmt. Die stärkere Komprimierung in den dicken Bereichen ist auf das frühere Auftreffen auf das gegenüberliegende Teil bei einer Relativbewegung der beiden Teile aufeinander zu zurückzuführen.

Ebenso ist es zusätzlich oder alternativ zu dem Vorsehen eines ungleichmäßig dicken Elastomers denkbar, dass ein benachbarter oder beabstandeter Abschnitt des ersten und/oder zweiten Elastomers eine ungleichmäßige Dicke, d.h. einen Dickenverlauf aufweist. Hierdurch wird der erste und/oder der zweite Elastomer ebenfalls ungleichmäßig komprimiert. Die Komprimierung ist in Bereichen größerer Dicke des ersten bzw. zweiten Abschnittes ebenfalls erhöht, da diese Bereiche zuerst auf das gegenüberliegende Teil auftreffen, wenn die Teile aufeinander zu bewegt werden. Der Ablösevorgang beginnt in den Bereichen geringster Dicke des ersten bzw. zweiten Abschnittes und damit in den Bereichen geringster Kompression der Elastomere.

### Kurze Beschreibung der Zeichnungen

Weitere Vorteile und zweckmäßige Ausführungen der Erfindung sind in den weiteren Ansprüchen, der Figurenbeschreibung und der Zeichnung erläutert.

Es zeigen:
- Fig. 1a:
- bis:
- Fig. 1c:: unterschiedliche Ablösestadien eines ersten Ausführungsbeispiels, wobei eines der Teile eine Elastomerschicht mit einem Dickenverlauf aufweist,
- Fig. 2a und Fig. 2b:: ein weiteres Ausführungsbeispiel, wobei die Elastomerschicht eine konstante Dicke aufweist und der zu ihr benachbarte Abschnitt des Teils einen linearen Dickenverlauf aufweist,
- Fig. 3a und Fig. 3b:: eine Abwandlung des Ausführungsbeispiels der Fig. 2a und 2b, wobei die Kontaktfläche des zweiten Teils durchgehend geschlossen ist und
- Fig. 4:: ein Diagramm, das den Dickenverlauf einer Elastomerschicht über den Umfangswinkel darstellt.

### Ausführungsformen der Erfindung

In den Figuren sind gleiche Bauteile und Bauteile mit gleicher Funktion mit den gleichen Bezugszeichen gekennzeichnet.

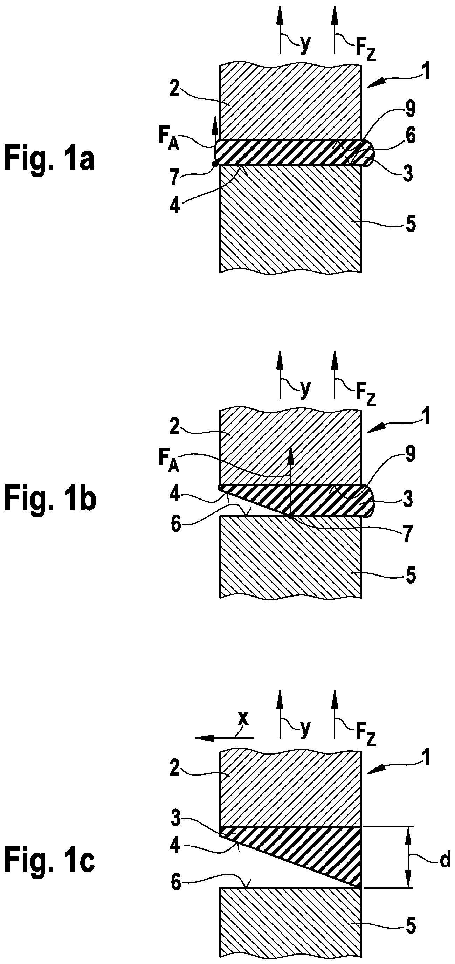

Die Fig. 1a bis 1c zeigen einen Flachsitz. Zu erkennen ist ein in der Zeichnungsebene oberes, erstes Teil 1, umfassend einen in der Zeichnungsebene oberen ersten Abschnitt 2 aus Metall und einen in der Zeichnungsebene unterhalb daran anschließenden ersten Elastomer 3, welcher eine erste Kontaktfläche 4 bildet.

In der Zeichnungsebene unterhalb des ersten Teils 1 befindet sich ein einstückiges zweites Teil 5 aus Metall, mit einer zweiten, ebenen Kontaktfläche 6. Die erste Kontaktfläche 4 ist zur zweiten Kontaktfläche 6 geneigt ausgebildet, wobei die Unterseite 9 des ersten Abschnitts 2 des ersten Teils 1 parallel zur zweiten Kontaktfläche 6 verläuft. Das erste Teil 1 bildet den Anker einer nicht dargestellten Elektromagneteinrichtung. Bei Bestromung der mindestens einen Spule der Elektromagneteinrichtung wirkt auf das erste Teil eine Zugkraft F_{z} in y-Richtung.

Insbesondere in Fig. 1c ist zu erkennen, dass die Dicke d, also die Erstreckung des ersten Elastomers 3 in Bewegungsrichtung y in Querrichtung x linear abnimmt. Dies führt dazu, dass der Elastomer 3 in seinem in der Zeichnungsebene rechten Ende wesentlich stärker komprimiert wird, als in seinem in der Zeichnungsebene linken Ende (vgl. Fig. 1a). Dabei nimmt die Kompressionsrate linear von rechts nach links ab. Dies wiederum führt dazu, dass eine aus der Zugkraft F_{z} resultierende Ablösekraft F_{A} nicht gleichmäßig über die Kontaktflächen 4, 6 verteilt wirkt, sondern dass die Ablösekraft F_{A} während des Ablösevorgangs lediglich an einer senkrecht in die Zeichnungsebene hineinverlaufende Linie 7 wirkt. Diese Linie 7 wandert während des Ablösevorgangs quer zu ihrer Längserstreckung beginnend an dem in der Zeichnungsebene linken Ende des ersten Elastomers 3 und endend in dem in der Zeichnungsebene rechten Ende des ersten Elastomers 3.

In den Fig. 1a bis 1c ist der schälende Ablösevorgang schematisch dargestellt. In Fig. 1a liegt der erste Elastomer 3 vollflächig auf dem zweiten Teil 5 an. Durch Aufbringen einer Zugkraft F_{z} auf das erste Teil 1 entspannt sich zunächst der erste Elastomer 3, wobei der erste Elastomer 3 zuerst an seinem in der Zeichnungsebene linken Ende völlig entspannt ist, so dass an dieser Stelle eine Ablösekraft F_{A} zu wirken beginnt. Die Ablösekraft F_{A} wirkt zunächst entlang der Linie 7, die sich zu Beginn des Ablösevorgangs am linke Ende des ersten Elastomers 3 befindet. In Fig. 1b ist zu erkennen, dass die Linie 7, an der die Ablösekraft F_{A} konzentriert ist, in der Zeichnungsebene weiter nach rechts gewandert ist. Links von der Linie 7 ist der erste Elastomer 3 und damit das erste Teil 1 von dem zweiten Teil 5 abgelöst. In der Zeichnungsebene rechts von der Linie 7 haftet der erste Elastomer 3 noch an der zweiten Kontaktfläche 6 an. In diesem rechten Bereich wirkt die Zugkraft F_{z} nicht als Ablösekraft, sondern trägt zur Entspannung des ersten Elastomers 3 in Bewegungsrichtung y bei. Lediglich entlang der Linie 7 erfolgt der nach rechts wandernde Ablösevorgang. Der Elastomer 3 unterstützt dabei im Bereich rechts von der Linie 7 den Ablösevorgang, durch die gespeicherte in y-Richtung wirkende Kompressionsenergie.

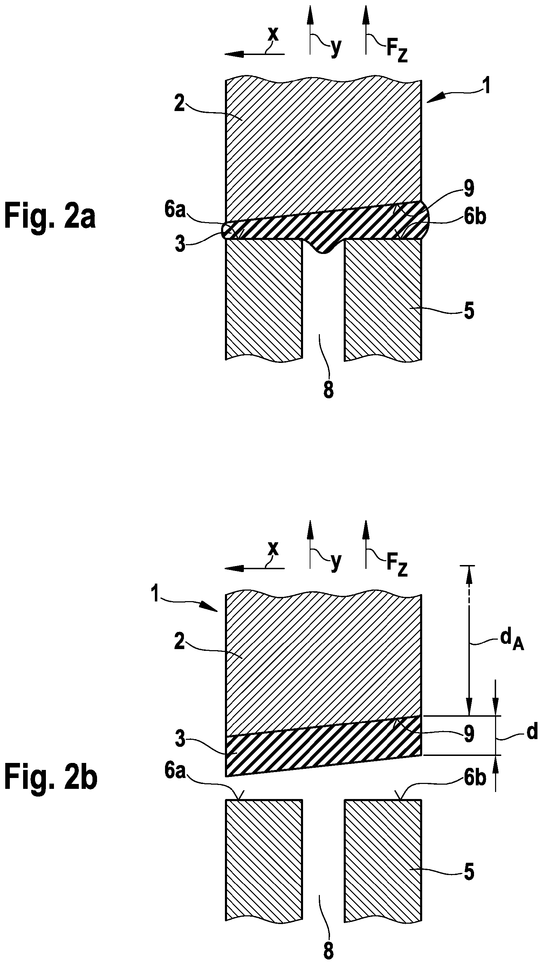

In den Fig. 2a und 2b ist ein weiteres Ausführungsbeispiel gezeigt. Dabei ist die Kontaktfläche 6 des zweiten Teils 5 unterteilt in zwei Kontaktflächenabschnitte 6a, 6b, die durch einen Spalt 8 in x-Richtung, voneinander getrennt sind. Die Dicke d (Erstreckung in senkrechter y-Richtung) des ersten Elastomers 3 ist konstant. Jedoch ist der erste Abschnitt 2 des ersten Teils 1 bzw. dessen Unterseite 9, auf die der erste Elastomer 3 aufvulkanisiert ist, in Bezug auf die Senkrechte, geneigt. Anders ausgedrückt ist die Dicke d_{A} des Abschnittes 2 über seine Erstreckung in x-Richtung nicht konstant, sondern fällt linear in der Zeichnungsebene von links nach rechts ab. Hierdurch wird der erste Elastomer 3 an seinem in der Zeichnungsebene linken Ende stärker komprimiert als an dem in der Zeichnungsebene rechten Ende (vgl. Fig. 2a), wodurch wiederum der Ablöseprozess beim Aufbringen einer Zugkraft F_{z} am in der Zeichnungsebene rechten Ende des ersten Elastomers 3 beginnt.

Alternativ ist es auch denkbar, dass der erste Elastomer 3 beispielsweise kegelförmig ausgebildet ist, also in der Mitte die größte Dicke aufweist. Bei einem derart ausgestalteten Elastomer breitet sich eine kreisförmige Ablösekante von radial außen nach radial innen aus. Eine inverse Ausbildung (kegelförmige Ausnehmung im Elastomer) des ersten Elstomers ist ebenfalls denkbar, wobei in diesem Fall der Ablösevorgang an einem zentrischen Punkt beginnt und sich kreisringförmig nach radial außen fortpflanzt.

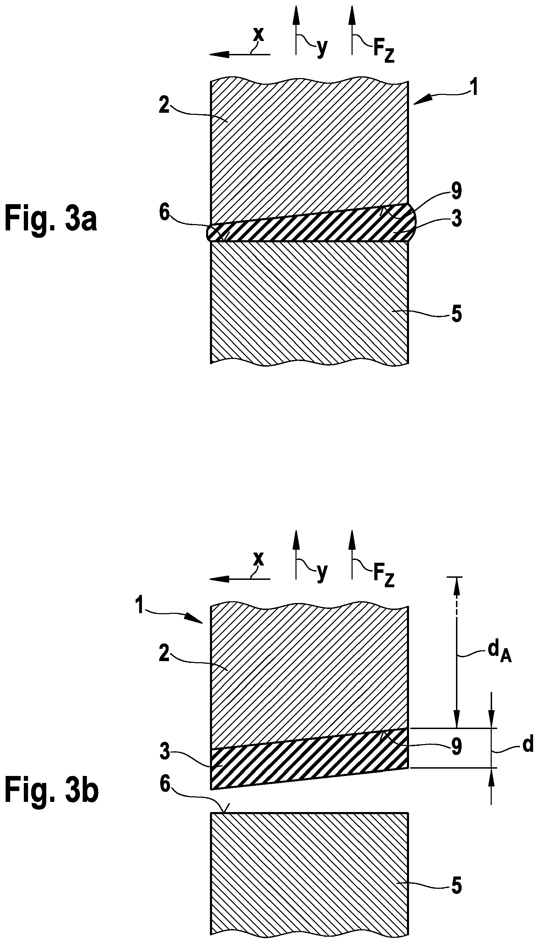

Das Ausführungsbeispiel der Fig. 3a und 3b entspricht im Wesentlichen dem Ausführungsbeispiel gemäß Fig. 2a und Fig. 2b, so dass zur Vermeidung von Wiederholungen auf entsprechende Beschreibungsteile verwiesen wird. Im Unterschied zu dem Ausführungsbeispiel gemäß Fig. 2a und Fig. 2b ist die Kontaktfläche 6 des zweiten Teils 5 durchgehend geschlossen ausgebildet.

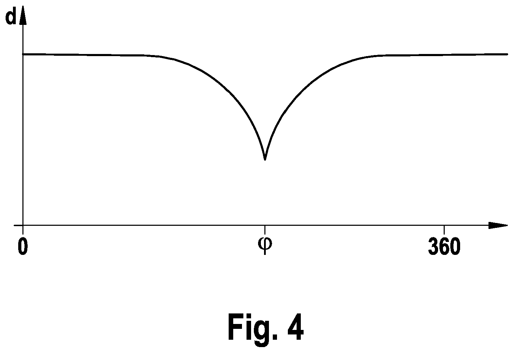

In Fig. 4 ist in einem Diagramm der Verlauf der Dicke d eines ersten oder zweiten Elastomers über seinen Umfangswinkel ϕ dargestellt. Es handelt sich beispielsweise um einen kreisförmigen Elastomer. Beim Anheben des ersten oder zweiten Teils kommt es zunächst an der Stelle ϕ zu einer lokalen Trennung des Elastomers vom Dichtsitz bzw. vom gegenüberliegenden Teil. Danach werden die aneinander liegenden Kontaktflächen benachbart zum Startpunkt ϕ schälend voneinander getrennt.

## Patentansprüche

1. Anordnung von einem ersten Teil (1) mit einer ersten Kontaktfläche (4) und einem zweiten Teil (5) mit einer zweiten, an der ersten Kontaktfläche (4) des ersten Teils (1) anlegbaren zweiten Kontaktfläche (6), wobei mindestens ein Ablösemittel zum Aufbringen einer Ablösekraft (F_{A}) auf zumindest eines der aneinander anliegenden Teile (1, 5) vorgesehen ist, wobei das erste Teil (1) einen ersten Elastomer (3) umfasst und/oder das zweite Teil (5) einen zweiten Elastomer umfasst, **dadurch gekennzeichnet, dass** der erste und/oder der zweite Elastomer (3) bei aneinander anliegenden, insbesondere aneinander gedrückten, Teilen (1, 5) ungleichmäßig stark komprimiert ist und dass die Ablösekraft (F_{A}) aus einer von den Ablösemitteln in senkrechter Richtung zu den Kontaktflächen (4, 6) gerichteten Zugkraft (F_{z}) resultiert, und dass das erste und/oder das zweite Teil (1, 5) die Ablösekraft (F_{A}) ungleichmäßig verteilt einleitend ausgebildet ist, so dass der Ablösevorgang schälend erfolgt, und dass die von den Ablösemitteln aufgebrachte Zugkraft in dem noch anhaftenden Elastomerbereich noch nicht als Ablösekraft wirkt, sondern unterstützt die Entkompression des Elastomers unterstützt.

2. Anordnung nach einem der vorhergehenden Ansprüche, **dadurch gekennzeichnet, dass** das erste und/oder das zweite Teil (1, 5) derart ausgebildet ist, dass die Ablösekraft (F_{A}) punktförmig oder linienförmig am ersten und/oder zweiten Teil (1, 5) im Bereich der ersten und/oder der zweiten Kontaktfläche (4, 6) angreift.

3. Anordnung nach Anspruch 4, **dadurch gekennzeichnet, dass** die erste Kontaktfläche (4) von dem ersten Elastomer (3) und/oder die zweite Kontaktfläche (6) von dem zweiten Elastomer gebildet ist.

4. Anordnung nach einem der Ansprüche 1 oder 2, **dadurch gekennzeichnet, dass** das erste Elastomer (3) benachbart zur ersten Kontaktfläche (4) und/oder das zweite Elastomer benachbart oder beabstandet zur zweiten Kontaktfläche (6) angeordnet ist.

5. Anordnung nach einem der vorhergehenden Ansprüche, **dadurch gekennzeichnet, dass** das erste und/oder das zweite Elastomer (3) bei nicht aneinander anliegenden Teilen (1, 5), insbesondere in einer Richtung senkrecht zu den Kontaktflächen (4, 6), eine ungleichmäßige Dicke (d) aufweist.

6. Anordnung nach einem der vorhergehenden Ansprüche, **dadurch gekennzeichnet, dass** ein erster zu dem ersten Elastomer (3) benachbarter oder beabstandeter erster Abschnitt (2) des ersten Teils (1) in einer Richtung senkrecht zu den Kontaktflächen (4, 6) insbesondere eine ungleichmäßige Dicke (d1) aufweist, und/oder ein zweiter zu dem zweiten Elastomer benachbarter oder beabstandeter Abschnitt des zweiten Teils (2), vorzugsweise in einer Richtung senkrecht zu den Kontaktflächen (4, 6), eine ungleichmäßige Dicke aufweist.

7. Anordnung nach einem der vorhergehenden Ansprüche, **dadurch gekennzeichnet, dass** die Teile (1, 5) relativ zueinander bewegbare Bestandteile eines Ventils, insbesondere eines Gas-Injektors, sind.

## Claims

1. Assembly from a first part (1) having a first contact face (4) and from a second part (5) having a second contact face (6) that is capable of bearing on the first contact face (4) of the first part (1), wherein at least one releasing means for exerting a release force (F_{A}) on at least one of the mutually bearing parts (1, 5) is provided, wherein the first part (1) comprises a first elastomer (3), and/or the second part (5) comprises a second elastomer, **characterized in that** the first and/or the second elastomer (3) in the case of mutually bearing, in particular of mutually compressed, parts (1, 5) are/is compressed in a non-uniformly intense manner, and **in that** the release force (F_{A}) results from a tensile force (F_{Z}) that is directed from the releasing means in the direction perpendicular to the contact faces (4, 6), and **in that** the first and/or the second part (1, 5) are/is configured so as to introduce the release force (F_{A}) in a non-uniformly distributed manner such that the release procedure is performed in a peeling manner, and such that the tensile force that is exerted by the releasing means in the still adhering elastomer region does not yet act as a release force but supports the de-compression of the elastomer.

2. Assembly according to one of the preceding claims, **characterized in that** the first and/or the second part (1, 5) are/is configured in such a manner that the release force (F_{A}) engages on the first and/or the second part (1, 5) in a punctiform or linear manner in the region of the first and/or the second contact face (4, 6).

3. Assembly according to Claim 4, **characterized in that** the first contact face (4) is formed by the first elastomer (3), and/or the second contact face (6) is formed by the second elastomer.

4. Assembly according to one of Claims 1 or 2, **characterized in that** the first elastomer (3) is disposed so as to be adjacent to the first contact face (4), and/or the second elastomer is disposed so as to be adjacent to or spaced apart from the second contact face (6).

5. Assembly according to one of the preceding claims, **characterized in that** the first and/or the second elastomer (3) in the case of not mutually bearing parts (1, 5), in particular in a direction perpendicular to the contact faces (4, 6), have/has a non-uniform thickness (d).

6. Assembly according to one of the preceding claims, **characterized in that** a first portion (2) of the first part (1) that is adjacent to or spaced apart from the first elastomer (3), in a direction perpendicular to the contact faces (4, 6) in particular has a non-uniform thickness (d1), and/or a second portion of the second part (2) that is adjacent to or spaced apart from the second elastomer, preferably in a direction perpendicular to the contact faces (4, 6), has a non-uniform thickness.

7. Assembly according to one of the preceding claims, **characterized in that** the parts (1, 5) are components of a valve, in particular of a gas injector, that are movable in relation to one another.

## Revendications

1. Agencement d'une première pièce (1) avec une première surface de contact (4) et d'une deuxième pièce (5) avec une deuxième surface de contact (6) pouvant être appliquée contre la première surface de contact (4) de la première pièce (1), au moins un moyen de décollement étant prévu pour appliquer une force de décollement (F_{A}) à au moins l'une des pièces s'appliquant l'une contre l'autre (1, 5), la première pièce (1) comprenant un premier élastomère (3) et/ou la deuxième pièce (5) comprenant un deuxième élastomère, **caractérisé en ce que** le premier et/ou le deuxième élastomère (3), lorsque les pièces (1, 5) s'appliquent l'une contre l'autre, en particulier sont pressées l'une contre l'autre, est comprimé avec une force non uniforme, et **en ce que** la force de décollement (F_{A}) résulte d'une force de traction (F_{Z}) orientée depuis les moyens de décollement dans la direction perpendiculaire aux surfaces de contact (4, 6), et **en ce que** la première et/ou la deuxième pièce (1, 5) est réalisée de manière à introduire la force de décollement (F_{A}) de manière répartie non uniformément de telle sorte que l'opération de décollement s'effectue par pelage, et que la force de traction appliquée par les moyens de décollement n'agisse pas encore en tant que force de décollement dans la région de l'élastomère qui adhère encore, mais favorise la décompression de l'élastomère.

2. Agencement selon l'une quelconque des revendications précédentes, **caractérisé en ce que** la première et/ou la deuxième pièce (1, 5) est réalisée de telle sorte que la force de décollement (F_{A}) s'exerce ponctuellement ou linéairement sur la première et/ou la deuxième pièce (1, 5) dans la région de la première et/ou de la deuxième surface de contact (4, 6).

3. Agencement selon la revendication 4, **caractérisé en ce que** la première surface de contact (4) est formée par le premier élastomère (3) et/ou la deuxième surface de contact (6) est formée par le deuxième élastomère.

4. Agencement selon l'une quelconque des revendications 1 ou 2, **caractérisé en ce que** le premier élastomère (3) est adjacent à la première surface de contact (4) et/ou le deuxième élastomère est adjacent à la deuxième surface de contact (6) ou est espacé de celle-ci.

5. Agencement selon l'une quelconque des revendications précédentes, **caractérisé en ce que** le premier et/ou le deuxième élastomère (3), lorsque les pièces (1, 5) ne s'appliquent pas l'une contre l'autre, en particulier dans une direction perpendiculaire aux surfaces de contact (4, 6), présente(nt) une épaisseur non uniforme (d).

6. Agencement selon l'une quelconque des revendications précédentes, **caractérisé en ce qu'**une première portion (2) de la première pièce (1) adjacente au premier élastomère (3) ou espacée de celui-ci présente, dans une direction perpendiculaire aux surfaces de contact (4, 6), notamment une épaisseur non uniforme (d1), et/ou une deuxième portion de la deuxième pièce (2), adjacente au deuxième élastomère ou espacée de celui-ci, présente de préférence dans une direction perpendiculaire aux surfaces de contact (4, 6), une épaisseur non uniforme.

7. Agencement selon l'une quelconque des revendications précédentes, **caractérisé en ce que** les pièces (1, 5) sont des constituants déplaçables l'un par rapport à l'autre d'une soupape, en particulier d'un injecteur de gaz.
